# EUROPÄISCHE PATENTSCHRIFT

(11) **EP 3 491 724 B1**
(45) Veröffentlichungstag und Bekanntmachung des Hinweises auf die Patenterteilung: **02.09.2020**
(21) Anmeldenummer: 17742248.2
(22) Anmeldetag: 20.07.2017
(51) Int. Cl.: H02K 55/04, H02K 9/197, H02K 9/20, H02K 1/30, H02K 3/47

(54) **ROTOR MIT SPULENANORDNUNG UND WICKLUNGSTRÄGER**
ROTOR WITH COIL ARRANGEMENT AND WINDING SUPPORT
ROTOR COMPRENANT UN ENSEMBLE BOBINE ET UN SUPPORT D'ENROULEMENTS

(30) Priorität: 16.09.2016 DE 102016217734
(43) Veröffentlichungstag der Anmeldung: 05.06.2019
(73) Patentinhaber: Rolls-Royce Deutschland Ltd & Co KG, 15827 Blankenfelde-Mahlow (DE)
(72) Erfinder: FRANK, Michael, 91080 Uttenreuth (DE); RICHTER, Johannes, 90768 Fürth (DE); WEIDERMANN, Christian, 07381 Pössneck (DE); VAN HASSELT, Peter, 91058 Erlangen (DE)
(86) Internationale Anmeldenummer: PCT/EP2017/068361
(87) Internationale Veröffentlichungsnummer: WO 2018/050330

(56) Entgegenhaltungen:
- CA-A- 993 489
- US-A- 6 129 477
- US-A1- 2006 125 331

## Beschreibung

Die vorliegende Erfindung betrifft einen Rotor für eine elektrische Maschine, wobei der Rotor wenigstens eine elektrische Spulenanordnung und wenigstens einen Wicklungsträger umfasst, der die wenigstens eine Spulenanordnung mechanisch trägt. Weiterhin betrifft die Erfindung eine elektrische Maschine mit einem solchen Rotor.

Nach dem Stand der Technik werden die Spulenanordnungen in den Rotoren elektrischer Maschinen typischerweise auf einem radial innenliegenden Wicklungsträger mechanisch gehalten. Bei diesen radial innenliegenden Wicklungsträgern handelt es sich oft um geblechte Eisenkerne, die den Innenraum vollständig ausfüllen und auf deren Außenseite die Wicklungen aufgebracht werden. Um die Spulen mechanisch tragen zu können, weisen solche Eisenkerne oft auf ihrer radial außenliegenden Seite ein gestuftes Profil auf, so dass die nach radial außen ragenden Vorsprünge des Eisenkerns in das Zentrum der einzelnen Spulenanordnungen hineingreifen und diese von ihrer Mitte aus halten können. Das Eisen eines solchen Wicklungsträgers dient dabei gleichzeitig zur magnetischen Flussführung im Rotor.

Um die elektrischen Spulenanordnungen des Rotors kühlen zu können, sind diese häufig mittels einer komplexen Kühlungsstruktur an ein Kühlsystem gekoppelt. Eine solche Kühlungsstruktur umfasst typischerweise, insbesondere für supraleitende Rotorwicklungen, eine Mehrzahl von thermisch hoch leitfähigen Elementen, mittels derer die in den Spulenanordnungen entstehende Wärme an ein räumlich entfernt zirkulierendes Kühlmittel abgeführt werden kann. Diese thermisch leitfähigen Elemente enthalten oft eine große Menge an Kupfer. Das zirkulierende Kühlmittel kann beispielsweise in einem Hohlraum im Inneren des Wicklungsträgers fließen und außerhalb des Rotors rückgekühlt werden. Eine derartige Kühlungsstruktur und ein derartiges Kühlsystem sind besonders wichtig für den Betrieb des Rotors, wenn die Spulenanordnungen supraleitende Wicklungen aufweisen, deren Leitermaterial im Betrieb auf eine kryogene Temperatur unterhalb der Sprungtemperatur des Supraleiters gekühlt werden muss. Besonders bei einem derartigen supraleitenden Rotor ist der Gewichtsbeitrag der Kühlungsstruktur oft relativ groß. Aber auch bei einem normalleitenden Rotor kann durch die schwere, hoch wärmeleitfähige Kühlungsstruktur ein hoher Gewichtsbeitrag zustande kommen.

Ein weiterer Nachteil eines solchen bekannten Rotors ist, dass durch die hohen Dichten von den verwendeten eisen- und kupferhaltigen Materialien im Betrieb des Rotors hohe Fliehkraftbelastungen zustande kommen. Hierdurch sind die maximalen Drehzahlen von herkömmlichen Maschinen, insbesondere supraleitenden Maschinen, stark limitiert.

In der US 6129477A ist ein Rotor mit einer supraleitenden Wicklung offenbart, bei der die Wicklung auf einem radial außenliegenden Wicklungsträger angeordnet ist und von radial innen mit einem kryogenen Kühlmittel gekühlt wird.

Aufgabe der Erfindung ist es daher, einen Rotor anzugeben, welcher die genannten Nachteile überwindet. Insbesondere soll ein Rotor zur Verfügung gestellt werden, welcher eine vergleichsweise geringe Masse aufweist und/oder hohe Drehzahlen erreichen kann. Eine weitere Aufgabe ist es, eine elektrische Maschine mit einem derartigen Rotor anzugeben.

Diese Aufgaben werden durch den in Anspruch 1 beschriebenen Rotor und die in Anspruch 10 beschriebene elektrische Maschine gelöst.

Der erfindungsgemäße Rotor ist als Rotor für eine elektrische Maschine ausgelegt. Er umfasst wenigstens eine elektrische Spulenanordnung und wenigstens einen Wicklungsträger, der die wenigstens eine Spulenanordnung mechanisch trägt und diese auf einer radial außenliegenden Seite der Spulenanordnung wenigstens teilweise umgibt. Der Rotor weist ein zusätzliches Stützelement auf, welches skelettartig ausgebildet ist und den wenigstens einen Wicklungsträger von einer radial innenliegenden Richtung aus abstützt. Der Rotor weist eine Mehrzahl von innenliegenden Hohlräumen auf, in denen ein fluides Kühlmittel zirkulierbar ist und die auf ihrer radial innenliegenden Seite an das Stützelement und auf ihrer radial außenliegenden Seite an die wenigstens eine Spulenanordnung und/oder an den wenigstens einen Wicklungsträger angrenzen. Der Rotor ist so ausgelegt, dass die wenigstens eine Spulenanordnung zumindest auf ihrer radial innenliegenden Seite in Kontakt mit dem Kühlmittel treten kann.

Wesentlich ist, dass der Rotor wenigstens eine elektrische Spulenanordnung aufweist, durch die bei Fließen eines elektrischen Stroms ein elektromagnetisches Feld ausgebildet werden kann. Insbesondere kann der Rotor sogar wenigstens zwei radial gegenüberliegende Spulenanordnungen aufweisen, die zusammen ein magnetisches Polpaar ausbilden. Eine solche Mehrzahl von Spulenanordnungen bildet zusammen die Rotorwicklung aus. Jede der Spulenanordnungen kann dabei entweder nur eine Wicklungslage oder eine Mehrzahl von Wicklungslagen umfassen. Die einzelnen, sich axial erstreckenden Leiterbereiche einer solchen Spulenanordnung können beispielsweise über Wicklungsköpfe in den axialen Endbereichen elektrisch miteinander verbunden sein. Die Rotorwicklung als Ganzes kann dabei entweder aus einem zusammenhängenden Leiter oder aus mehreren einzelnen Leitern gebildet sein, die zumindest teilweise nachträglich zu einer übergeordneten Wicklung miteinander kontaktiert sein können.

Unabhängig von der genauen Ausgestaltung der Rotorwicklung aus einer oder mehreren Spulenanordnungen ist es wesentlich für die Erfindung, dass die wenigstens eine Spulenanordnung von wenigstens einem radial außenliegenden Wicklungsträger mechanisch gehalten wird. Die mechanische Halterung der Spulenanordnung(en) wird also mit anderen Worten über eine exoskelettartige Struktur erreicht. Diese exoskelettartige Struktur soll die Spulenanordnung(en) radial außenliegend wenigstens teilweise umgeben - mit anderen Worten soll der Wicklungsträger mit mehr als einer Fläche an der wenigstens einen Spulenanordnung anliegen, um diese in mehreren Richtungen abstützen zu können. Insbesondere kann der Wicklungsträger sowohl radial außenliegend als auch in Umfangsrichtung an die Spulenanordnung(en) angrenzen, um diese sowohl in radialer Richtung nach außen als auch in azimutaler Richtung gegen einwirkende Kräfte abstützen zu können. So kann die Spulenanordnung bei einer Drehung des Rotors sowohl gegen die nach außen wirkenden Fliehkräfte als auch gegen die in Umfangsrichtung wirkenden Kräfte abgestützt werden.

Durch die innenliegenden Hohlräume kann das fluide Kühlmittel so zirkulieren, dass es die Spulenanordnung von einer radial innenliegenden Seite aus entwärmen kann. Hierzu kann die Spulenanordnung auf ihrer radial innenliegenden Seite zumindest teilweise frei liegen - also nicht vom Wicklungsträger umgeben sein - so dass das Kühlmittel die Spulenwicklung auf dieser Seite anströmen kann. Insbesondere kann es also in direkten Kontakt mit der Spulenanordnung treten. Hierbei kann insbesondere die Leiterwicklung der Spulenanordnung selbst von Kühlmittel angeströmt oder umströmt werden. Entweder kann der Leiter selbst oder aber eine den Leiter umgebende elektrische Isolations-, Imprägnierungs- und/oder Schutzschicht so in direktem Kontakt mit dem Kühlmittel stehen, dass die Spulenanordnung die im Betrieb entstehende Wärme an das Kühlmittel abführen kann. Wesentlich ist, dass die thermische Kopplung des Kühlmittels an die Spulenanordnung(en) nicht allein durch zusätzliche wärmeleitende Kühlstrukturen über eine räumliche Entfernung hinweg erreicht wird, sondern dass das Kühlmittel in direktem Kontakt mit einem Bestandteil der Spulenanordnung steht. Dabei soll aber nicht ausgeschlossen sein, dass zusätzlich eine wärmeleitende Kühlstruktur vorliegt. Beispielsweise kann zusätzlich zu dem direkten Kontakt des Kühlmittels mit der Spulenanordnung ein sich in Umfangsrichtung erstreckender wärmeleitender Ring vorliegen, um bei einem Stillstand des Rotors die gerade nicht mit dem Kühlmittel in Kontakt tretenden azimutalen Bereiche der Spulenanordnung zu kühlen. Wesentlich im Zusammenhang mit der vorliegenden Erfindung ist nur, dass zumindest ein Teil der Spulenanordnung zu einem bestimmten Zeitpunkt im direkten Kontakt mit dem Kühlmittel steht.

Durch die beschriebenen Merkmale des erfindungsgemäßen Rotors wird erreicht, dass der Rotor mit vergleichsweise geringer Masse ausgelegt werden kann und dass trotzdem eine effektive Entwärmung der Spulenanordnung(en) erfolgen kann. Durch die Halterung der Spulenanordnungen(en) von außen nach Art eines Exoskeletts wird erreicht, dass radial innenliegend neben der Spulenanordnung mehrere Hohlräume zum Zirkulieren von Kühlmittel angeordnet werden können. Eine solche offene Struktur erlaubt nicht nur eine effiziente Entwärmung, sondern auch eine geringe gemittelte Dichte des Rotors, denn das Kühlmittel hat typischerweise eine geringere Dichte als die tragenden Teile des außenliegenden Wicklungsträgers. Dabei können im axial innenliegenden Bereich des Rotors entweder größere Teile des Querschnitts als Hohlraum ausgeführt sein und/oder es können ein oder mehrere weitere feste Elemente vorgesehen sein, die den wenigstens einen Wicklungsträger zusätzlich abstützen. Wesentlich ist, dass der Rotor durch die Abstützung der Spulenanordnung(en) nach außen hin insgesamt wesentlich leichter ausgeführt werden kann, als wenn die Spulenanordnung(en) auf einem innenliegenden massiven Träger abgestützt ist. Durch die vergleichsweise geringere Dichte beziehungsweise geringere Masse des Rotors können durch die erfindungsgemäße Ausgestaltung vorteilhaft auch besonders hohe Drehzahlen realisiert werden.

Die erfindungsgemäße elektrische Maschine weist einen erfindungsgemäßen Rotor und einen feststehend angeordneten Stator auf. Die Vorteile der erfindungsgemäßen Maschine ergeben sich analog zu den beschriebenen Vorteilen des erfindungsgemäßen Rotors.

Vorteilhafte Ausgestaltungen und Weiterbildungen der Erfindung gehen aus den von den Ansprüchen 1 und 10 " abhängigen Ansprüchen sowie der folgenden Beschreibung hervor. Dabei können die beschriebenen Ausgestaltungen des Rotors und der elektrischen Maschine vorteilhaft miteinander kombiniert werden.

Die elektrische Spulenanordnung kann vorteilhaft ein supraleitendes Leitermaterial aufweisen. Die Vorteile der Erfindung kommen bei einem solchen supraleitenden Rotor besonders zum Tragen, da die effektive Kühlung des Leiters auf eine kryogene Temperatur dann besonders wichtig ist. Für das Erzielen einer Maschine mit einer hohen Leistungsdichte und/oder einer hohen Drehzahl ist es dabei besonders vorteilhaft, dass die zur Kühlung notwendigen Strukturen ohne einen hohen Gewichtsbeitrag geschaffen werden.

Besonders vorteilhaft kann die elektrische Spulenanordnung ein hochtemperatursupraleitendes Material umfassen. Hochtemperatursupraleiter (HTS) sind supraleitende Materialien mit einer Sprungtemperatur oberhalb von 25 K und bei einigen Materialklassen, beispielsweise den Cuprat-Supraleitern, oberhalb von 77 K. Bei diesen Leitern kann die Betriebstemperatur durch Kühlung mit anderen kryogenen Materialien als flüssigem Helium erreicht werden. Dabei soll allerdings nicht ausgeschlossen sein, dass trotzdem Helium zur Kühlung verwendet werden kann, um eine deutlich unterhalb der Sprungtemperatur liegende Betriebstemperatur einzustellen. HTS-Materialien sind auch deshalb besonders attraktiv, da diese Materialien abhängig von der Wahl der Betriebstemperatur hohe obere kritische Magnetfelder sowie hohe kritische Stromdichten aufweisen können.

Der Hochtemperatursupraleiter kann beispielsweise Magnesiumdiborid oder einen oxidkeramischen Supraleiter, beispielsweise eine Verbindung des Typs REBa₂Cu₃Oₓ (kurz REBCO) aufweisen, wobei RE für ein Element der seltenen Erden oder eine Mischung solcher Elemente steht.

Der supraleitende Leiter der Spulenanordnung kann allgemein vorteilhaft ein Bandleiter, insbesondere ein hochtemperatursupraleitender Bandleiter sein. Bei dem Bandleiter kann es sich vorteilhaft um einen flachen Bandleiter, insbesondere mit rechteckigem Querschnittsprofil, handeln. Dabei können beispielsweise mehrere aufeinanderfolgende Windungen des Bandleiters flach aufeinander liegen. Bandleiter, bei denen ein normalleitendes Substrat mit einer HTS-Schicht beschichtet ist, sind besonders vorteilhaft für die Herstellung supraleitender Spulenwicklungen für elektrische Maschinen.

Insbesondere bei Vorliegen eines solchen supraleitenden Rotors kann dieser für eine Betriebstemperatur der Spulenanordnung(en) in einem Temperaturbereich von 90 K oder tiefer, insbesondere in einem Temperaturbereich von 77 K oder tiefer ausgelegt sein. Beispielsweise kann die Betriebstemperatur im Bereich von etwa 30 K liegen.

Der Rotor kann eine Mehrzahl n von Spulenanordnungen aufweisen, wobei jede der n Spulenanordnungen auf einem ihr zugeordneten separaten Wicklungsträger angeordnet ist, beziehungsweise von diesem gehalten wird. Mit anderen Worten kann die Struktur zur mechanischen Halterung der einzelnen Spulenanordnungen in einzelne Wicklungsträger segmentiert sein. Diese einzelnen Wicklungsträger-Segmente können insbesondere auf verschiedenen Umfangspositionen des Rotors angeordnet sein. Der Vorteil einer solchen Ausführungsform liegt insbesondere in einer vereinfachten Herstellbarkeit der gesamten mechanischen Halterungsstruktur der Spulenanordnungen. Die einzelnen Spulenanordnungen können beispielsweise jeweils separat mit dem zugeordneten Wicklungsträger verbunden werden, bevor diese Wicklungsträger entweder miteinander oder mit einer übergeordneten Halterungsstruktur verbunden werden.

Alternativ zu der beschriebenen segmentierten Ausführungsform kann aber auch jede der n Spulenanordnungen auf einem ihr zugeordneten Umfangssegment eines übergeordneten, gemeinsamen Wicklungsträgers angeordnet sein beziehungsweise von diesem gehalten werden. Bei dieser Ausführungsform liegt also ein über den gesamten Umfang des Rotors durchgehendes Exoskelett vor, innerhalb dessen die einzelnen Spulenanordnungen in Umfangsrichtung verteilt angeordnet sind. Ein Vorteil eines solchen übergeordneten Wicklungsträgers ist, dass ein stabiler mechanischer Halt gewährleistet ist, ohne dass ein zusätzliches Element zur Halterung der einzelnen Segmente benötigt wird. Ein solcher übergeordneter, radial außenliegender Wicklungsträger kann die einzelnen Spulenanordnungen sowohl gegen radiale Fliehkräfte als auch gegen Kräfte in Umfangsrichtung abstützen, ohne dass hierfür zusätzliche Halteelemente benötigt werden.

Der Rotor weist erfindungsgemäß ein zusätzliches Stützelement auf, welches insbesondere skelettartig, fachwerkartig und/oder speichenartig ausgebildet ist und den wenigstens einen Wicklungsträger von einer radial innenliegenden Richtung aus abstützt. Mit anderen Worten ist bei einer solchen Ausführungsform die Funktion der mechanischen Halterung der Spulenanordnungen stufenweise auf wenigstens zwei Elemente aufgeteilt: Der oder die Wicklungsträger begrenzen die Spulenanordnung(en) nach radial außen und halten sie von dort. Das zusätzliche Stützelement stützt und hält dagegen den oder die Wicklungsträger von einem radial innenliegenden Bereich des Rotors aus. Diese Ausführungsform ist besonders bei der oben beschriebenen Segmentierung in einzelne Wicklungsträger auf verschiedenen Umfangsbereichen vorteilhaft. Dann werden diese einzelnen Wicklungsträger-Segmente durch das Stützelement zusammengehalten und zum axialen Zentrum des Rotors hin gestützt. Das Stützelement kann wie ein innenliegendes Skelett ausgebildet sein, um den Gewichtsbeitrag zum Gesamtgewicht des Rotors möglichst gering zu halten. Aufgrund der Trennung der Funktion in radial außenliegende Abstützung der Spulenanordnung(en) durch den oder die Wicklungsträger und radial innenliegende Abstützung durch das Stützelement können insbesondere für Wicklungsträger und Stützelement auch unterschiedliche Materialien zum Einsatz kommen. Für beide Elemente können relativ leichte Materialien zum Einsatz kommen, da die thermische Ankopplung der Spulenanordnung(en) an das Kühlmittel nicht über diese Strukturen erfolgen muss. Dabei können die Materialien der verschiedenen Strukturen getrennt an die unterschiedlichen Belastungen angepasst werden: Das Material des Stützelements kann besonders auf Widerstandsfähigkeit gegen Zugbelastungen und Belastungen in Umfangsrichtung ausgelegt sein, während das Material des wenigstens einen Wicklungsträgers besonders für hohe radiale Druckbelastungen ausgelegt sein kann, insbesondere wegen einer möglichen starken thermischen Schrumpfung der Spulenanordnung bei einer Abkühlung auf die Betriebstemperatur. So kann durch die Kombination eines Exoskeletts (Wicklungsträger) mit einem Endoskelett (Stützelement) vorteilhaft eine besonders hohe Gesamtfestigkeit bei geringem Gewichtsbeitrag erzielt werden.

Wenn der Rotor eine Mehrzahl n von Spulenanordnungen aufweist, kann das Stützelement insbesondere im Wesentlichen eine n-zählige Rotationssymmetrie aufweisen. Bei einer solchen symmetrischen Ausführung ist die Kräfteverteilung besonders günstig, und das Stützelement kann bei vorgegebenen Drehzahl-Anforderungen besonders leicht ausgeführt werden.

Allgemein kann das skelettartige Stützelement aus einem amagnetischen Material gebildet sein. Insbesondere bei der Verwendung von supraleitenden Spulenanordnungen ist die magnetische Flussführung innerhalb der tragenden Strukturen des Rotors nicht nötig und auch nicht erwünscht. Insbesondere kann es sich um eine bei der Betriebstemperatur des Rotors kaltzähe Kryolegierung handeln, beispielsweise eine Titan-, Aluminium-, Nickel- oder Eisenlegierung. Alternativ kann auch ein Faserverbundwerkstoff zum Einsatz kommen. Titan- und Aluminiumlegierungen sowie Faserverbundwerkstoffe sind dabei aufgrund ihres geringen Gewichts besonders bevorzugt.

Das Stützelement kann sich beispielsweise im Wesentlichen über die axiale Länge des Rotors erstrecken. Dann stützt es den oder die Wicklungsträger vorteilhaft auf dieser ganzen Länge gegen das Zentrum des Rotors hin ab. Alternativ kann das Stützelement aber auch nur in axialen Teilbereichen ausgebildet sein, insbesondere in den axialen Endbereichen - den sogenannten Stirnflächen. Dann kann der Innenraum des Rotors im axial innenliegenden Bereich entweder hohl sein oder zumindest einen relativ großen Anteil von Hohlräumen aufweisen. Dies kann besonders vorteilhaft sein, um einen Rotor mit möglichst geringer Masse auszubilden. Besonders bei der Ausführungsform mit einem zusammenhängenden, übergeordneten Wicklungsträger kann es vorteilhaft sein, Stützelemente nur in axialen Teilbereichen auszubilden, weil dann eine Abstützung auf der gesamten axialen Länge nicht nötig ist. Aber auch bei der Verwendung von separaten Wicklungsträger-Segmenten kann es vorteilhaft sein, diese auf dem Umfang des Rotors zu einer festen Struktur miteinander zu verbinden, so dass die Ausbildung eines Stützelements nicht auf der ganzen axialen Länge nötig ist. Es ist jedoch auch denkbar und vorteilhaft, dass die einzelnen Wicklungsträger-Segmente hauptsächlich oder sogar im Wesentlichen nur über das Stützelement miteinander verbunden sind. Dann kann es zweckmäßig sein, wenn sich das Stützelement über einen Großteil der axialen Länge erstreckt. Vor allem in diesem Fall ist es vorteilhaft, wenn das Stützelement skelettartig ausgebildet ist, um den Gewichtsbeitrag zu reduzieren. Wenn das Stützelement nur in axialen Teilbereichen vorliegt, kann es alternativ auch andere Formen aufweisen. Beispielsweise kann es dann auch scheibenförmig sein. Durch die geringe axiale Ausdehnung solcher Scheiben ist der Gewichtsbeitrag dann trotzdem vorteilhaft begrenzt.

Der Rotor weist erfindungsgemäß eine Mehrzahl von Hohlräumen auf, welche auf ihrer radial innenliegenden Seite an das Stützelement und auf ihrer radial außenliegenden Seite an die wenigstens eine Spulenanordnung und/oder an den wenigstens einen Wicklungsträger angrenzen. Insbesondere ist es vorteilhaft, wenn mehrere solche Hohlräume in azimutaler Richtung über den Rotor verteilt sind, und diese Hohlräume an die dem jeweiligen Winkelsegment zugeordnete Spulenanordnung angrenzen. Dann kann über im jeweiligen Hohlraum zirkulierendes Kühlmittel die jeweilige Spulenanordnung vorteilhaft direkt gekühlt werden, ohne dass zusätzliche und unter Umständen schwere Elemente zur thermischen Ankopplung durch Wärmeleitung benötigt werden. Zusätzlich zu diesem erwünschten Kontakt des jeweiligen Hohlraums mit der Spulenanordnung kann der Hohlraum ebenfalls an Teile des Wicklungsträgers angrenzen, um diesen beispielsweise ebenfalls zu entwärmen. Es ist dabei nicht ausgeschlossen, dass der jeweilige Hohlraum auch noch an andere zu entwärmende Elemente angrenzt, beispielsweise an Stromzuführungen, die zur Verbindung der Spulenanordnung(en) mit einem äußeren Stromkreis vorgesehen sind, oder an Kontakte, die vorgesehen sein können, um beispielsweise einzelne Wicklungslagen der Spulenanordnung(en) miteinander zu verbinden oder um die einzelnen Spulenanordnungen des Rotors untereinander zu verbinden. Gerade für die Kühlung solcher Kontaktstellen oder Stromzuführungen ist es vorteilhaft, wenn diese Leiterbereiche von Kühlmittel direkt angeströmt werden können, wenn sie also an die betreffenden Hohlräume des Rotors angrenzen.

Die einzelnen Hohlräume können vorteilhaft fluidisch miteinander verbunden sein. Sie können also mit anderen Worten als Teile eines übergeordneten Kühlmittelraums ausgestaltet sein. Hierzu können beispielsweise Öffnungen in verschiedenen Bereichen des zentralen Stützelements vorgesehen sein, die die einzelnen Hohlräume und damit die einzelnen parallelen Kühlmittelkanäle miteinander verbinden. Beispielsweise kann das Stützelement allgemein ein zentrales Rohr und eine Mehrzahl von sich radial nach außen erstreckenden Stützstreben aufweisen. Diese Stützstreben können beispielsweise in axialer Richtung Lücken oder zumindest Fenster aufweisen, durch die Kühlmittel in einen benachbarten Hohlraum hindurchtreten kann. Alternativ oder zusätzlich kann auch das zentrale Rohr mit derartigen Fenstern ausgestaltet sein, um den axial innenliegenden Bereich dieses Rohrs mit den radial weiter außenliegenden Hohlraum-Kammern fluidisch zu verbinden. So kann Kühlmittel von der zentralen Transportleitung im Inneren dieses Rohrs in die radial weiter außenliegenden Bereiche (und wieder zurück) gelangen.

Der Rotor kann allgemein vorteilhaft wenigstens eine Bandage aufweisen, mittels derer der wenigstens eine Wicklungsträger im Rotor fixiert ist. Insbesondere kann der Wicklungsträger oder die Mehrzahl von Wicklungsträgern so auf einem zentralen, skelettartigen Stützelement fixiert sein. Eine solche Bandagierung ist besonders vorteilhaft, um eine Mehrzahl von segmentartigen Wicklungsträgern, die über den Umfang des Rotors verteilt sind, entweder gegeneinander zu fixieren oder auf einem Stützelement zu fixieren oder beides. Eine solche Bandage kann zweckmäßig radial außerhalb des wenigstens einen Wicklungsträgers angeordnet sein. Auf diese Weise kann es diesen Wicklungsträger oder auch die Mehrzahl von Wicklungsträgern ähnlich wie ein Gürtel oder ein Korsett fixieren. Die Bandage kann beispielsweise aus einem bandförmigen Element gebildet sein. Dieses kann in Form einer Spiralwicklung um den Umfang des Rotors gewickelt sein oder auch in Form eines ringförmig den Rotor umgebenden Bandes oder mehrerer solcher Bänder. Ein solches bandförmiges Element kann beispielsweise als Material einen Faserverbundwerkstoff, insbesondere einen glasfaserverstärkten Kunststoff und/oder einen kohlefaserverstärkten Kunststoff umfassen. Allgemein ist es jedenfalls vorteilhaft, wenn das Material der Bandage eine hohe Steifigkeit und eine hohe Zugfestigkeit in tangentialer Richtung des Rotors aufweist. Vorteilhaft kann es sich hierzu um ein Material mit anisotroper Festigkeit handeln, wobei aber je nach Ausgestaltung auch Materialien mit isotroper Festigkeit in Frage kommen können. Alternativ zu der Ausführung als bandförmige Wicklung kann eine derartige Bandage auch durch einen Zylinder gegeben sein, der auf die innenliegenden Elemente des Rotors aufgeschrumpft wird, beispielsweise ein metallischer Zylinder, insbesondere ein Zylinder aus einer Titanlegierung. Beispielsweise kann ein solches Aufschrumpfen durch die thermische Schrumpfung beim Abkühlen auf eine kryogene Betriebstemperatur erfolgen.

Allgemein und unabhängig von der genauen Ausführung der Bandage kann es vorteilhaft sein, wenn diese mit einer Vorspannung um die innenliegenden Elemente des Rotors - also insbesondere um den oder die Wicklungsträger und gegebenenfalls das Stützelement - angeordnet wird. Besonders vorteilhaft ist diese Vorspannung so gewählt, dass sie auch bei einer Abkühlung des Rotors auf seine Betriebstemperatur zumindest zum Teil erhalten bleibt. Der Vorteil einer solchen unter Vorspannung gehaltenen Bandage ist, dass durch sie die im Betrieb auftretenden mechanischen Spannungen im Rotor in eine tangentiale Zugspannung in der Bandage umgewandelt werden, die durch die vorteilhaften Materialien der Bandage besonders leicht abgefangen werden können.

Das fluide Kühlmittel des Rotors kann besonders vorteilhaft Wasserstoff sein. Wasserstoff ist deshalb besonders geeignet, weil es einerseits einen ausreichend niedrigen Siedepunkt aufweist, um im flüssigen Zustand als kryogenes Kühlmittel zu wirken. Andererseits weist es eine geringe Dichte auf, was sich günstig auf das Gesamtgewicht des Rotors inklusive Kühlmittel auswirkt. Ein solches Kühlmittel mit geringer Dichte ist auch besonders geeignet, um Rotoren für schnelldrehende Maschinen mit großen Durchmessern zur Verfügung stellen zu können. Durch die geringe Dichte ist auch die durch den hydrostatischen Druck entstehende Siedepunktverschiebung klein.

Alternativ zur genannten Ausführungsform mit Wasserstoff können als Kühlmittel aber auch andere Flüssigkeiten oder auch Gase zum Einsatz kommen. Weitere vorteilhafte kryogene Kühlmittel sind flüssiges Helium, flüssiges Neon, flüssiger Stickstoff, flüssiger Sauerstoff und/oder flüssiges Methan. Dabei kann bei Verwendung all dieser kryogenen Kühlmittel prinzipiell die flüssige Form neben der Gasform vorliegen, und es kann durch ein Verdampfen der Flüssigkeit im Bereich der zu kühlenden Komponenten eine zusätzliche Kühlwirkung erreicht werden. So ist es möglich, dass das kryogene Kühlmittel im Inneren des Rotors insbesondere nach dem Thermosiphon-Prinzip und/oder nach Art eines Wärmerohrs zirkuliert.

Prinzipiell ist es aber auch möglich, dass als Kühlmittel Wasser oder Öl oder eine andere nicht-kryogene Kühlflüssigkeit zum Einsatz kommt. Diese Kühlmittel sind insbesondere zur Kühlung von Rotoren mit normalleitenden Spulenanordnungen geeignet. Dabei kann es vorteilhaft sein, das Kühlmittel mittels einer Pumpe im Hohlraum zu zirkulieren, um eine effektive Kühlwirkung im Bereich der Spulenanordnung zu erreichen. Grundsätzlich ist es möglich, dass das betreffende Kühlmittel entweder als Teil des Rotors ausgestaltet ist oder aber, dass der Rotor alternativ nur zum Betrieb mit einem solchen Kühlmittel ausgelegt ist und das Kühlmittel selbst nicht umfasst. Unabhängig von der genauen Wahl des Kühlmittels kann es allgemein vorteilhaft sein, das Kühlmittel durch ein zusätzliches Kühlsystem zurückzukühlen. Beispielsweise kann hierzu eine Kältemaschine außerhalb des Rotors angeordnet sein, oder aber es kann ein Wärmetauscher entweder am Rotor selbst oder außerhalb des Rotors angeordnet sein, um die Wärme aus dem Kühlmittel effizient an die äußere Umgebung zu übertragen.

Der Rotor kann einen elektrisch leitenden Dämpferschirm umfassen, welcher die wenigstens eine Spulenanordnung radial umgibt. Ein solcher Dämpferschirm ist vorteilhaft, um die Einkopplung elektromagnetischer Wechselfelder in die Spulenanordnung(en) des Rotors zu reduzieren und so entsprechende Wechselstromverluste im Rotor zu reduzieren. Ein solcher Dämpferschirm kann insbesondere als elektrisch leitender zylindrischer Mantel um die Spulenanordnung(en) des Rotors angeordnet sein.

Alternativ oder zusätzlich kann der Rotor eine äußere Kryostatwand aufweisen, welche die wenigstens eine Spulenanordnung radial umgibt. Eine solche Kryostatwand ist vorteilhaft, um die innerhalb davon liegenden Elemente des Rotors gegen die wärmere äußere Umgebung zu kapseln. In Kombination mit einer Superisolation und/oder einem Isoliervakuum kommt dabei auch eine thermische Trennung des Innenraums von der äußeren Umgebung zustande. Dies ist insbesondere im Zusammenhang mit supraleitenden Spulenanordnungen und einer kryogenen Betriebstemperatur dieser Spulenanordnungen von Vorteil. Bei einer solchen Kryostatwand kann es sich entweder um eine einzelne äußere Kryostatwand handeln oder es kann alternativ eine Kombination einer inneren und einer äußeren Kryostatwand vorliegen, wobei zwischen diesen beiden Kryostatwänden vorteilhaft ein Isoliervakuum vorgesehen ist.

Die genannten radial außenliegenden Elemente - also Dämpferschirm, innere Kryostatwand und/oder äußere Kryostatwand - können bei einer Mehrzahl von Spulenanordnungen insbesondere alle diese Spulenanordnungen sowie gegebenenfalls das Stützelement radial umgeben. Alle diese radial außenliegenden Elemente können, soweit sie in der betreffenden Ausführungsform vorhanden sind, vorteilhaft zylindrisch, insbesondere kreiszylindrisch ausgebildet sein.

Der Dämpferschirm kann insbesondere durch den Wicklungsträger selbst oder durch die Mehrzahl von Wicklungsträgern gegeben sein. Dies ist insbesondere beim Vorliegen eines nicht-segmentierten, einstückigen Wicklungsträgers vorteilhaft. Aber auch einzelne Wicklungsträger-Segmente können so elektrisch leitend miteinander verbunden sein, dass sie zusammen als Dämpferschirm wirken können.

Alternativ oder zusätzlich kann der Dämpferschirm auch durch eine der Kryostatwände oder durch beide Kryostatwände gegeben sein. So ist es auch möglich, dass mehrere der genannten Elemente zusammen die Funktion des Dämpferschirms erfüllen. Vorteilhafte Materialien für den Dämpferschirm sind metallische Materialien (beispielsweise Aluminium-Legierungen) oder kohlenstoffnanoröhren enthaltende Materialien.

Auch die wenigstens eine Kryostatwand kann insbesondere durch den Wicklungsträger selbst oder durch die Mehrzahl von Wicklungsträgern gegeben sein. Alternativ oder zusätzlich kann die Kryostatwand mit dem Dämpferschirm identisch sein, ohne dass dieses Element durch den oder die Wicklungsträger gegeben ist. Allgemein und unabhängig davon, welche Elemente bei der jeweiligen Ausführungsform miteinander kombiniert sind, kann die wenigstens eine Kryostatwand besonders vorteilhaft aus einem metallischen Material gebildet sein. Besonders vorteilhaft sind hierbei Aluminium- und Eisenhaltige Legierungen, aber prinzipiell kommt auch jedes andere vakuumdichte Material in Frage.

Bei Ausführungsformen, welche eine ineinander geschachtelte Anordnung von innerer und äußerer Kryostatwand aufweisen, ist es vorteilhaft, wenn zumindest die innere Kryostatwand sowohl dicht als auch widerstandsfähig gegenüber dem verwendeten Kühlmittel ist. Insbesondere kann die innere Kryostatwand aus einem Material gebildet sein, welches robust gegenüber der Einwirkung von Wasserstoff ist. Bei einer solchen Ausführungsform können innere und äußere Kryostatwand vorteilhaft aus unterschiedlichen Materialien gebildet sein, da die Anforderungen hier verschieden sind. So kann die innere Kryostatwand dann vorteilhaft eine wasserstoff-feste Titan-Legierung, Aluminium-Legierung oder Eisenlegierung umfassen, insbesondere eine sogenannte superaustenitische Legierung.

Der wenigstens eine Wicklungsträger kann vorteilhaft eisenlos ausgestaltet sein. Insbesondere können alle im Rotor vorliegenden Wicklungsträger eisenlos ausgestaltet sein. Sie können sogar gänzlich frei von magnetisch flussführenden Materialien ausgestaltet sein. Auch das zentrale Stützelement kann, sofern es im Rotor vorliegt, frei von derartigen magnetisch flussführenden Materialien sein. Eine solche Ausführung ohne weichmagnetische Materialien im Inneren des Rotors ist insbesondere im Zusammenhang mit supraleitenden Spulenanordnungen vorteilhaft, da hier eine magnetische Flussführung durch die übrigen Rotorelemente aufgrund der hohen magnetischen Flussdichten und der daraus resultierenden Sättigung nicht notwendig beziehungsweise nicht effektiv ist. Ein weiterer Vorteil der eisenlosen Ausführung ist, dass leichtere Materialien zum Einsatz kommen können und somit eine geringere Dichte des Rotors erzielt werden kann.

Der Rotor weist bevorzugt bezogen auf sein Gesamtvolumen eine durchschnittliche Materialdichte von höchstens 8 g/cm³ auf. Besonders bevorzugt liegt die durchschnittliche Materialdichte bei höchstens 5 g/cm³ oder sogar höchstens 3 g/cm³. Unter dem Gesamtvolumen soll dabei das gesamte vom Rotor eingeschlossene Volumen verstanden werden, also beispielsweise das gesamte Zylindervolumen, inklusive innenliegender Hohlräume. Durch die beschriebene offene Konstruktion des Rotors, bei der die Spulenanordnung(en) durch einen oder mehrere als Exoskelett ausgeführte Wicklungsträger gehalten werden, kann besonders vorteilhaft an hoher Anteil an innenliegenden Hohlräumen geschaffen werden. Selbst wenn diese Hohlräume teilweise oder sogar ganz mit fluidem Kühlmittel gefüllt sind, wird trotzdem ein wesentlich geringerer Beitrag zur durchschnittlichen Dichte geschaffen als mit herkömmlichen Materialien für den Wicklungsträger wie Stahl. Werden zusätzlich für den wenigstens eine außenliegenden Wicklungsträger und das optional vorhandene Stützelement relativ leichte Materialien wie Aluminium- oder Titanlegierungen oder Kohlefaserverbundwerkstoffe verwendet, so kann insgesamt eine sehr niedrige durchschnittliche Dichte in den beschriebenen Bereichen erreicht werden. Die Dichte der für Wicklungsträger und/oder Stützelement verwendeten Materialien kann dabei allgemein vorteilhaft unterhalb von 5 g/cm³ liegen. Wenn die auf das Gesamtvolumen bezogene durchschnittliche Dichte in den oben beschriebenen Bereichen liegt, so kann mit dem Rotor vorteilhaft eine Maschine mit einer besonders hohen Leistungsdichte zur Verfügung gestellt werden, was sich besonders bei der Anwendung in Fahrzeugen, insbesondere in Luftfahrzeugen, sehr günstig auswirken kann.

Das Material des wenigstens einen Wicklungsträgers weist bevorzugt einen thermischen Expansionskoeffizienten auf, der größer ist als der effektive thermische Expansionskoeffizient des elektrischen Leiters. Eine solche Ausführungsform ist insbesondere im Zusammenhang mit supraleitenden Spulenanordnungen vorteilhaft, da dann der oder die Wicklungsträger bei Abkühlung von Raumtemperatur auf eine kryogene Betriebstemperatur stärker schrumpfen als die darin eingebettete Spulenanordnung. So schrumpft also beim Kühlen der Wicklungsträger auf die Spulenanordnung auf und komprimiert diese. Es steht dadurch ein Vorspannungszustand, bei dem vorwiegend Druckspannungen auf den supraleitenden Leiter wirken. Diese Leiter sind allgemein gegenüber Druckspannungen weniger empfindlich als gegenüber Zugspannungen, da Zugspannungen leichter zu einer Delamination des supraleitenden Materials von einem darunterliegenden Träger führen können. Dies gilt insbesondere für die supraleitende Schicht in einem supraleitenden Bandleiter.

Der Rotor kann allgemein vorteilhaft zur Ausbildung eines p-poligen Magnetfeldes ausgelegt sein, wobei die Polzahl p besonders vorteilhaft zwischen 2 und 12, besonders vorteilhaft zwischen 6 und 12, insbesondere bei genau 8 liegen kann. Dazu kann die Polzahl p vorteilhaft identisch mit der Zahl n an im Rotor vorliegenden und in Umfangsrichtung verteilten Spulenanordnungen sein.

Der Rotor kann eine Rotorwelle zur um eine Rotationsachse drehbaren Lagerung des Rotors aufweisen. Diese Welle kann insbesondere eine segmentierte Welle sein, die beispielsweise wenigstens ein massiv ausgeführtes Segment und wenigstens ein hohl ausgeführtes Segment aufweisen kann. Im Zusammenhang mit der vorliegenden Erfindung ist es vorteilhaft, wenn die Rotorwelle zumindest in einem axial innenliegenden Bereich des Rotors hohl ausgeführt ist, um fluides Kühlmittel in den Innenraum des Rotors zu leiten und/oder von dort weg zu leiten.

Die elektrische Maschine mit dem erfindungsgemäßen Rotor kann vorteilhaft für eine Leistungsdichte von wenigstens 5 kW/kg ausgelegt sein, besonders vorteilhaft kann sie sogar für eine Leistungsdichte von wenigstens 10 kW/kg ausgelegt sein. Bei einer Maschine mit einer derart hohen Leistungsdichte kommen die beschriebenen Vorteile des Rotors besonders zum Tragen. Maschinen mit derart hohen Leistungsdichten sind andererseits eine Grundvoraussetzung für vollelektrisch angetriebene Luftfahrzeuge. Sie sind jedoch auch im Bereich anderer - insbesondere anderer mobiler - Anwendungen vorteilhaft. Unter der genannten Leistungsdichte soll die Nennleistung der Maschine bezogen auf ihr Gesamtgewicht verstanden werden, also bezogen auf das Gewicht des Stators, Rotors, Gehäuses, Kühlsystems plus eventuell zusätzlich vorliegender Komponenten.

Die Maschine ist bevorzugt für eine Nennleistung von wenigstens 5 MW, insbesondere wenigstens 10 MW, ausgelegt. Mit einer derart hohen Leistung ist sie grundsätzlich für den Antrieb eines Fahrzeugs, insbesondere eines Luftfahrzeugs geeignet. Alternativ kann mit einer derart leistungsstarken Maschine aber auch beim Betrieb als Generator der für den Antrieb benötigte elektrische Strom an Bord des Fahrzeugs erzeugt werden. Grundsätzlich kann die Maschine entweder als Motor oder als Generator ausgestaltet sein oder optional für beide Betriebsarten ausgelegt sein. Um die beschriebenen hohen Leistungen und/oder Leistungsdichten zu erzielen, sind supraleitende Spulenanordnungen besonders geeignet, da sie besonders hohe Stromdichten erlauben.

Die Maschine kann bevorzugt für eine Drehzahl des Rotors von wenigstens 1000 Umdrehungen pro Minute, insbesondere sogar für wenigstens 3000 Umdrehungen pro Minute, ausgelegt sein. Durch die beschriebene Ausführung des Rotors mit vergleichsweise geringer Dichte können derart hohe Drehzahlen besonders gut realisiert werden. Mit herkömmlichen Rotoren können sie bei einer für die genannten Leistungsbereiche benötigten Größe zum Teil gar nicht erreicht werden. Die für die beschriebenen Anwendungen vorteilhaften Leistungsdichten können andererseits mit langsamer drehenden Maschinen unter Umständen gar nicht erreicht werden.

Nachfolgend wird die Erfindung anhand einiger bevorzugter Ausführungsbeispiele unter Bezugnahme auf die angehängten Zeichnungen beschrieben, in denen:
- Figur 1: eine schematische Querschnittsdarstellung eines Rotors nach einem ersten Beispiel der Erfindung zeigt,
- Figur 2: eine schematische Teilansicht des Querschnitts aus Figur 1 zeigt,
- Figur 3: eine schematische Querschnittsdarstellung eines Rotors nach einem zweiten Beispiel der Erfindung zeigt und
- Figur 4: einen schematischen Längsschnitt einer Maschine nach einem weiteren Beispiel der Erfindung zeigt.

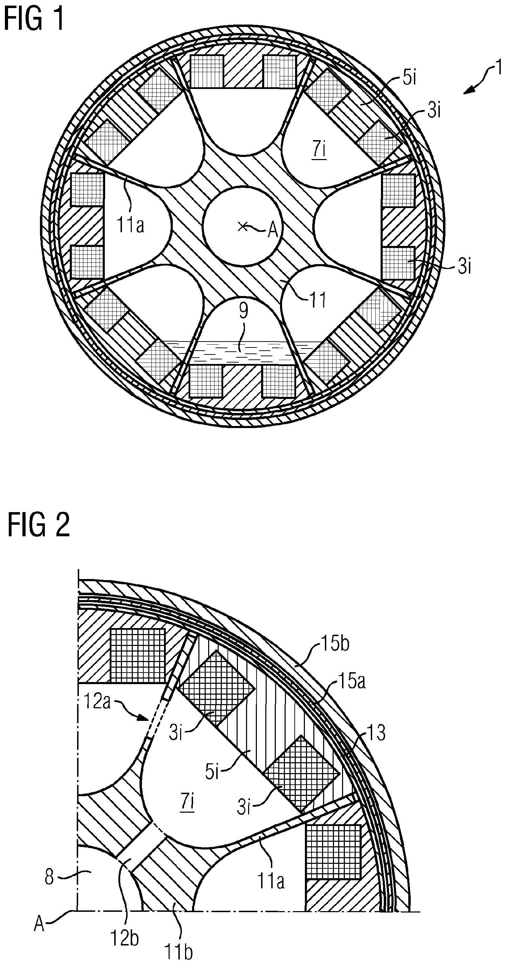

Figur 1 zeigt einen Rotor nach einem ersten Ausführungsbeispiel der Erfindung im schematischen Querschnitt senkrecht zur Rotationsachse A. Der Rotor weist in diesem Beispiel acht Spulenanordnungen 3i auf, die zu einer übergeordneten Rotorwicklung verbunden sind. Diese Rotorwicklung ist zur Erzeugung eines achtpoligen Magnetfeldes ausgelegt. Die einzelnen Spulenanordnungen 3i werden in diesem Beispiel jeweils separat von einem ihnen zugeordneten Wicklungsträger 5i mechanisch gehalten. Diese acht Wicklungsträger 5i stützen die ihnen jeweils zugeordnete Spulenanordnung 3i von einer radial außenliegenden Seite. Sie grenzen dazu an die radial außenliegenden Seiten dieser Spulenanordnungen 3i an. Außerdem grenzen sie auch mit ihrer seitlichen Fläche, also in azimutaler Richtung an die Spulenanordnungen 3i an, so dass diese Spulenanordnungen auf mehreren Seiten von dem jeweiligen Wicklungsträger umgeben und gehalten werden. Nur ihrer jeweils radial innenliegenden Seite grenzen die einzelnen Spulenanordnungen 3i nicht an die Wicklungsträger 5i, sondern an einen zugeordneten innenliegenden Hohlraum 7i. Dieser Hohlraum kann von einem fluiden Kühlmittel, im vorliegenden Beispiel flüssigem Wasserstoff, durchströmt werden, um die an den jeweiligen Hohlraum 7i angrenzende Spulenanordnung 3i zu kühlen.

Die acht Wicklungsträger 5i stützen die acht Spulenanordnungen 3i also von außen, nach der Art eines Exoskeletts. Im gezeigten Beispiel der Figur 1 sind die acht Wicklungsträger als separate Elemente realisiert. Sie sind jeweils nach radial innen durch ein gemeinsames Stützelement 11 abgestützt, welches ebenfalls skelettartig, aber in diesem Fall in der Art eines Endoskeletts aufgebaut ist. Das Stützelement weist eine achtzählige Symmetrie auf, um die auf die acht Spulenanordnungen wirkenden Kräfte möglichst gleichmäßig abzustützen. Die Struktur des Rotorquerschnitts der Figur 1 ist für einen Quadranten noch detaillierter in Figur 2 gezeigt. In den Figuren 1 und 2 ist zu erkennen, dass das Stützelement ein inneres Hohlrohr 11b und acht sich von dort aus radial nach außen erstreckende Stützstreben 11a aufweist. Die acht Wicklungsträger 5i sind dabei jeweils auf zwei zueinander benachbarten Stützstreben 11a abgestützt. Durch die Bereiche zwischen den Stützstreben 11a sind jeweils innenliegende Hohlräume 7i gegeben, in denen Kühlmittel die jeweils zugeordneten Spulenanordnung 3i anströmen kann. Diese einzelnen inneren Hohlräume 7i sind fluidisch miteinander zu einem übergeordneten Kühlmittelraum verbunden. Sie sind ebenfalls mit dem Rohrinnenraum 8 des zentralen Hohlrohrs 11b verbunden. Hierzu weisen die Stützstreben 11a jeweils Öffnungen 12a auf, und das innere Hohlrohr 11b weist eine Mehrzahl von Öffnungen 12b auf. Diese Öffnungen 12a und 12b sind in Figur 2 durch gestrichelte Linien angedeutet. Sie erstrecken sich nicht über die ganze axiale Länge des Rotors 1, sondern können in regelmäßigen oder unregelmäßigen Abständen über seine Länge verteilt sein. Wesentlich ist nur, dass ein Austausch von Kühlfluid zwischen den einzelnen Teilräumen 7i und 8 stattfinden kann, und dass gleichzeitig das Stützelement 11 eine ausreichende Abstützung der radial außenliegenden Elemente 5i und 3i gewährleistet.

Im in den Figuren 1 und 2 gezeigten axialen Abschnitt des Rotors 1 weist dieser also eine Hohlwelle auf, die durch das innere Hohlrohr 11b gegeben ist. Durch den Rohrinnenraum 8 kann kaltes, insbesondere flüssiges Kühlmittel in die radial weiter außenliegenden Hohlräume 7i gelangen und dort die Spulenanordnungen kühlen. Bei der Verwendung von flüssigem Wasserstoff und anderen flüssigen kryogenen Kühlmittel kann es dabei zu einer teilweisen Verdampfung dieser Kühlflüssigkeit kommen. Dann liegt in den Hohlräumen des Rotors 1 sowohl flüssiges als auch gasförmiges Kühlfluid nebeneinander vor. Wenn das Flüssigkeitsvolumen so gering ist, dass es nur einen Teil des Hohlraumvolumens ausfüllt, dann werden bei einem Stillstand des Rotors 1 nicht alle Komponenten gleichmäßig gekühlt. Ein solcher Stillstand ist in Figur 1 durch den horizontalen Flüssigkeitspegel der Kühlflüssigkeit 9 angedeutet. Kommt es aber zu einer Drehung des Rotors 1, so wird das flüssige Kühlmittel 9 durch die Zentrifugalkräfte im Wesentlichen gleichmäßig über die einzelnen Hohlräume und die einzelnen Spulenanordnungen 3i verteilt. Hierzu kommt es zu einer gleichmäßigen Kühlwirkung der einzelnen Komponenten beim Betrieb der elektrischen Maschine, die mit einem solchen Rotor ausgestattet ist. Auch wenn diese Maschine nicht im Betrieb ist, kann jedoch grundsätzlich eine Kühlwirkung erreicht werden. Wenn das Flüssigkeitsvolumen und/oder die Kühlwirkung des gasförmigen Kühlmittels zu einer Kühlung auf eine vorgegebene Temperatur nicht ausreicht, so kann der Rotor beispielsweise in einer Abkühlphase langsam rotiert werden. Diese Rotation muss nicht so hoch sein, dass sich das Kühlmittel gleichmäßig über den Umfang des Rotors 1 verteilt. Es kann beispielsweise zum Herunterkühlen auf eine vorgegebene Betriebstemperatur ausreichend sein, wenn der Rotor 1 so langsam gedreht wird, dass die einzelnen Spulenanordnungen 5i abwechselnd in Berührung mit dem Kühlmittel 9 kommen und so insgesamt im Laufe der Zeit gekühlt werden.

Die einzelnen Wicklungsträger 5i werden im gezeigten Beispiel der Figuren 1 und 2 dadurch zusammengehalten, dass sie mittels einer radial weiter außen liegenden Bandage 13 unter Vorspannung gegen das Stützelement 11 gepresst werden. Mit anderen Worten sind hier die einzelnen Elemente des Exoskeletts 5i auf die einzelnen Streben 11a des Endoskeletts 11 geschnallt. Radial außerhalb von dieser Bandage 13 ist eine innere Kryostatwand 15a angeordnet, die wiederum von einer äußeren Kryostatwand 15b umgeben ist. Zumindest die äußere Kryostatwand 15b wirkt im gezeigten Beispiel gleichzeitig als elektromagnetischer Dämpferschirm. Zwischen der zylindermantelförmigen inneren Kryostatwand 15a und der ebenfalls zylindermantelförmigen äußeren Kryostatwand 15b ist ein ringförmiger Vakuumraum ausgebildet. Hierdurch wird der innerhalb der Kryostatwände 15a und 15 liegende Bereich des Rotors 1 thermisch gegen die äußere Umgebung isoliert. Beide Kryostatwände 15a und 15b sind vakuumdicht ausgeführt. Die innere Kryostatwand 15a ist dabei aus einem gleichzeitig gegenüber dem Kühlmittel Wasserstoff dichten und robusten Material gefertigt.

Der in den Figuren 1 und 2 gezeigte Rotor 1 ist insgesamt sehr leicht ausgeführt, da er ein vergleichsweise großes Volumen an inneren Hohlräumen 7i und 8 aufweist, und da das Stützelement 11 und die Wicklungsträger 5i aus Materialien mit geringer Dichte gebildet sein können. Auf zusätzliche schwere Kupferelemente zur indirekten Kühlung der Spulenanordnungen 3i kann hier verzichtet werden, da die Spulenanordnungen 3i durch die offenen Struktur in direktem Kontakt mit dem Kühlmittel 9 sind.

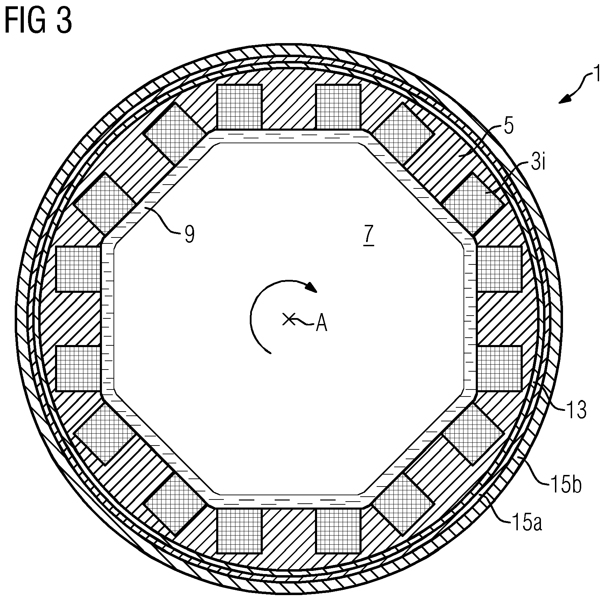

Figur 3 zeigt eine alternative Ausführungsform eines Rotors 1 nach einem zweiten Beispiel der Erfindung, ebenfalls im schematischen Querschnitt senkrecht zur Rotationsachse A. Auch hier liegen acht Spulenanordnungen 3i vor, mit denen insgesamt ein achtpoliges Magnetfeld erzeugt werden kann. Im Unterschied zum vorhergehenden Beispiel liegt hier ein gemeinsamer ring- beziehungsweise mantelförmiger Wicklungsträger 5 vor, der die einzelnen Spulenanordnungen 3i von einer radial außenliegenden Seite aus trägt. Durch die freitragende Struktur dieses Wicklungsträger-Rings wird ein zusätzliches Stützelement im inneren des Rotors 1 hier nicht benötigt. Die radial weiter außenliegenden Elemente - also Bandage 13, innere Kryostatwand 15a und äußere Kryostatwand 15b sind hier ähnlich ausgeführt wie beim vorhergehenden Beispiel. Die Bandage 13 ist hier optional, da der ringförmige Wicklungsträger 5 sich und die Spule 3 selber trägt und nicht auf eine Stützstruktur gepresst werden muss. Es kann aber trotzdem vorteilhaft sein, durch eine solche Bandage 13 eine von außen aufgebrachte Vorspannung auf den Wicklungsträger 5 aufzubringen, um seine mechanische Stabilität zu erhöhen und/oder ihn unter Spannung gegen axial weiter außenliegende und daher hier nicht gezeigte Stützelemente abzustützen.

Auch beim Beispiel der Figur 3 kann im innenliegenden Hohlraum 7 ein fluides Kühlmittel 9 strömen, wobei auch hier die flüssige Form zusammen mit der Gasform in einem Raum 7 vorliegen kann. Beim Betrieb der elektrischen Maschine, die mit einem solchen Rotor 1 ausgestattet ist, dreht sich der Rotor 1 um die Achse A, wie durch den Pfeil in der Mitte angedeutet ist. Hierbei verteilt sich das flüssige Kühlmittel bei ausreichend hoher Drehzahl über den Umfang des Rotors, wie durch den ringförmigen Flüssigkeitspegel schematisch gezeigt.

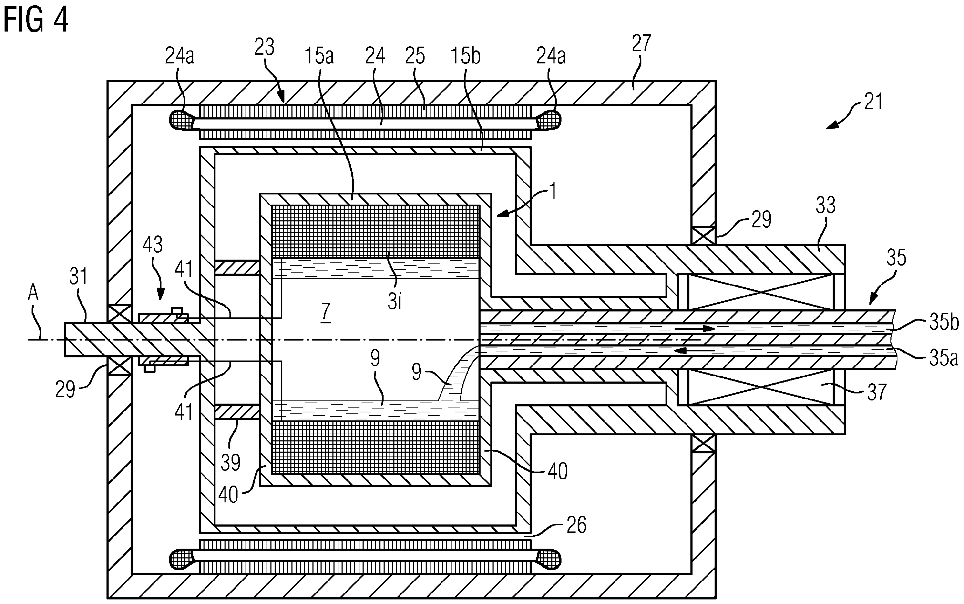

Figur 4 zeigt ein Ausführungsbeispiel für eine elektrische Maschine 21, welche mit einem Rotor 1 gemäß der vorliegenden Erfindung ausgestattet ist. Gezeigt ist hier ein schematischer Längsschnitt entlang der Rotationsachse A. Die Maschine weist außerdem einen feststehend angeordneten Stator 23 auf, der den Rotor 1 radial umgibt und der mit dem Maschinengehäuse 27 verbunden ist. Der Rotor 1 ist auf einer Rotorwelle 31 um die Rotationsachse A drehbar gelagert, wobei diese Rotorwelle 31 im zentralen Teil des Rotors 1 sowie im rechts dargestellten Bereich als Hohlwelle 33 ausgeführt ist. Es handelt sich also um eine segmentierte Welle. Im linken Teil der Figur 4 kann die Welle entweder als massive Welle ausgestaltet sein, oder sie kann auch hier als Hohlwelle mit einem kleineren Hohlraum ausgestaltet sein, beispielsweise um Stromzuführungen innerhalb der Welle anordnen zu können. Die Rotorwelle 31, 33 ist über Lager 29 in den axialen Endbereichen der Maschine drehbar gegen das feststehende Maschinengehäuse 27 abgestützt. Das Drehmoment wird im links dargestellten Teil des Rotors 1 zwischen der Rotorwelle 31 und dem eigentlichen Rotor 1 übertragen. Hierzu ist zwischen Rotor 1 und Rotorwelle 31 eine Drehmomentübertragungseinrichtung 39 angeordnet, die im gezeigten Beispiel kreiszylinderförmig ausgestaltet ist. Außerdem sind auf dieser Seite des Rotors Stromzuführungen 41 angeordnet, um die Spulenanordnungen 3i des Rotors 1 mit einem äußeren Stromkreis über Schleifringe 43 zu verbinden. Von der rechts dargestellten Seite des Rotors 1 wird über die Hohlwelle 33 fluides Kühlmittel 9 in das Innere des Rotors eingespeist und von hier wieder nach außen geführt. Hierzu weist die Hohlwelle 33 in ihrem Inneren eine Zuleitung 35a und eine Rückleitung 35b. An dem rechts dargestellten Wellenende können diese Leitungen mit einem außerhalb der Welle befindlichen Kühlsystem und hier nicht näher dargestellten zu einem geschlossenen Kühlmittelkreislauf verbunden sein. Diese Leitungen 35a und 35b sind als Teil eines übergeordneten Kühlmittelrohrs 35 innerhalb der Hohlwelle 33 feststehend angeordnet und mit dieser durch eine Drehdurchführung 37 verbunden.

Der Rotor 1 der in Figur 4 gezeigten elektrischen Maschine kann beispielsweise ähnlich wie in Figur 3 dargestellt ausgestaltet sein. Er kann insbesondere eine Mehrzahl von Spulenanordnungen 3i aufweisen, die zur Ausbildung eines p-poligen Magnetfelds ausgelegt sind. Diese Spulenanordnungen 3i sind wiederum über den Umfang des Rotors 1 verteilt und werden von einem oder mehreren außenliegenden Wicklungsträgern 5 oder 5i mechanisch gehalten. Diese Wicklungsträger sind hier der Übersicht halber nicht näher dargestellt. Im Beispiel der Figur 4 weist das Rotorinnere einen durchgehenden innenliegenden Hohlraum 7 ohne innenliegende Stützstruktur auf, ähnlich wie beim Rotor der Figur 3. Die Wicklungsträger und somit die Spulenanordnungen 3i werden lediglich an den beiden axialen Endbereichen des Rotors durch scheibenförmige Stützelemente 40 gehalten. Alternativ zu der in Figur 4 dargestellten Ausführungsform ist es aber auch möglich, dass der Rotor ein skelettartiges Stützelement im axial innenliegenden Bereich des Rotors 1 aufweist, durch das ein oder mehrere Wicklungsträger 5, 5i von innen abgestützt werden.

Die Spulenanordnungen 3i und damit auch die hier nicht gezeigten Wicklungsträger werden radial von einer inneren Kryostatwand 15a und danach von einer äußeren Kryostatwand 15b umgeben. Dazwischen ist zur thermischen Isolation ein Vakuumraum V vorgesehen, der im Vergleich zum Beispiel der Figuren 1 bis 3 deutlich vergrößert dargestellt ist. Diese Größenverhältnisse sind jedoch nicht maßstabsgetreu, und die Figuren sind insoweit nur schematisch zu verstehen. Außerhalb der äußeren Kryostatwand 15b sind die feststehenden Teile des Stators 23 angeordnet. Insbesondere ist auf dem Stator-Wicklungsträger 25 eine Statorwicklung 24 angeordnet, deren axiale Wicklungsabschnitte in ihren axialen Endbereichen mit Wickelköpfen 24a verbunden sind. Die Statorwicklung 24 tritt beim Betrieb der elektrischen Maschine 21 in elektromagnetische Wechselwirkung mit dem elektromagnetischen Feld des Rotors 1. Diese Wechselwirkung findet über einen Luftspalt 26 hinweg statt, der radial zwischen Rotor 1 und Stator 33 liegt. Die Statorwicklung 24 wird im gezeigten Beispiel von einem amagnetisch ausgebildeten Stator-Wicklungsträger 25 getragen, es handelt sich hier also um eine Luftspaltwicklung ohne Eisenzähne zwischen den Windungen der Wicklung.

## Patentansprüche

1. Rotor (1) für eine elektrische Maschine (21), umfassend
- wenigstens eine elektrische Spulenanordnung (3i),
- wenigstens einen Wicklungsträger(5,5i), der die wenigstens eine Spulenanordnung (3i) mechanisch trägt und diese auf einer radial außenliegenden Seite der Spulenanordnung wenigstens teilweise umgibt,
- **dadurch gekennzeichnet, dass** der Rotor ein zusätzliches Stützelement (11) aufweist, welches skelettartig ausgebildet ist und den wenigstens einen Wicklungsträger (5i) von einer radial innenliegenden Richtung aus abstützt
- und dass der Rotor eine Mehrzahl von innenliegenden Hohlräumen (7i) aufweist, in denen ein fluides Kühlmittel (9) zirkulierbar ist und die auf ihrer radial innenliegenden Seite an das Stützelement (11) und auf ihrer radial außenliegenden Seite an die wenigstens eine Spulenanordnung (3i) und/oder an den wenigstens einen Wicklungsträger (5i) angrenzen,
derart, dass die wenigstens eine Spulenanordnung (3i) zumindest auf ihrer radial innenliegenden Seite in Kontakt mit dem Kühlmittel (9) treten kann.

2. Rotor (1) nach Anspruch 1, bei welchem die elektrische Spulenanordnung (3i) ein supraleitendes Leitermaterial aufweist.

3. Rotor (1) nach Anspruch 1 oder 2, der eine Mehrzahl n von Spulenanordnungen (3i) aufweist,
- wobei jede der Spulenanordnungen (3i) auf einem ihr zugeordneten einzelnen Wicklungsträger (5i) angeordnet ist.

4. Rotor (1) nach Anspruch 1 oder 2, der eine Mehrzahl n von Spulenanordnungen (3i) aufweist,
- wobei jede der Spulenanordnungen (3i) auf einem ihr zugeordneten Umfangssegment eines übergeordneten, gemeinsamen Wicklungsträgers (5) angeordnet ist.

5. Rotor (1) nach einem der vorhergehenden Ansprüche, der zusätzlich wenigstens eine Bandage (13) aufweist, mittels derer der wenigstens eine Wicklungsträger (5,5i) im Rotor fixiert ist.

6. Rotor (1) nach einem der vorhergehenden Ansprüche, bei dem das fluide Kühlmittel (9) Wasserstoff ist.

7. Rotor (1) nach einem der vorhergehenden Ansprüche, welcher einen elektrisch leitenden Dämpferschirm (15b) und/oder eine Kryostatwand (15a,15b) aufweist, die die wenigstens eine Spulenanordnung (3i) radial umgeben.

8. Rotor (1) nach einem der vorhergehenden Ansprüche, bei welchem der wenigstens eine Wicklungsträger (5,5i) eisenlos ausgestaltet ist.

9. Rotor (1) nach einem der vorhergehenden Ansprüche, welcher bezogen auf sein Gesamtvolumen eine durchschnittliche Materialdichte von höchstens 8 g/cm³ aufweist.

10. Elektrische Maschine (21) mit einem Rotor (1) nach einem der vorhergehenden Ansprüche und einem feststehend angeordneten Stator (23).

11. Elektrische Maschine (21) nach Anspruch 10, welche für eine Leistungsdichte von wenigstens 5 kW/kg ausgelegt ist.

12. Elektrische Maschine (21) nach einem der Ansprüche 10 oder 11, welche für eine Nennleistung von wenigstens 5 MW ausgelegt ist.

13. Elektrische Maschine (21) nach einem der Ansprüche 10 bis 12, welche für eine Drehzahl des Rotors (1) von wenigstens 1000 Umdrehungen pro Minute ausgelegt ist.

## Claims

1. Rotor (1) for an electrical machine (21), comprising
- at least one electrical coil arrangement (3i),
- at least one winding carrier (5, 5i) which mechanically carries the at least one coil arrangement (3i) and at least partially surrounds the said coil arrangement on a radially outer side of the coil arrangement,
- **characterized in that** the rotor has an additional supporting element (11) which is of skeleton-like design and supports the at least one winding carrier (5i) from a radially inner direction,
- and **in that** the rotor has a plurality of inner cavities (7i), in which a fluid coolant (9) can circulate and which, on their radially inner side, adjoin the supporting element (11) and, on their radially outer side, adjoin the at least one coil arrangement (3i) and/or the at least one winding carrier (5i), in such a way that the at least one coil arrangement (3i), at least on its radially inner side, can come into contact with the coolant (9).

2. Rotor (1) according to Claim 1, in which the electrical coil arrangement (3i) comprises a superconducting conductor material.

3. Rotor (1) according to Claim 1 or 2, which has a plurality n of coil arrangements (3i),
- wherein each of the coil arrangements (3i) is arranged on an individual winding carrier (5i) which is associated with it.

4. Rotor (1) according to Claim 1 or 2, which has a plurality n of coil arrangements (3i),
- wherein each of the coil arrangements (3i) is arranged on a circumferential segment, which is associated with it, of a superordinate, common winding carrier (5).

5. Rotor (1) according to one of the preceding claims, which additionally has at least one binding band (13) by means of which the at least one winding carrier (5, 5i) is fixed in the rotor.

6. Rotor (1) according to one of the preceding claims, in which the fluid coolant (9) is hydrogen.

7. Rotor (1) according to one of the preceding claims, which has an electrically conductive damping screen (15b) and/or a cryostat wall (15a, 15b) which radially surround/surrounds the at least one coil arrangement (3i) .

8. Rotor (1) according to one of the preceding claims, in which the at least one winding carrier (5, 5i) is of iron-free configuration.

9. Rotor (1) according to one of the preceding claims, which has an average material density of at most 8 g/cm³ based on its total volume.

10. Electrical machine (21) comprising a rotor (1) according to one of the preceding claims and a fixedly arranged stator (23).

11. Electrical machine (21) according to Claim 10, which is designed for a power density of at least 5 kW/kg.

12. Electrical machine (21) according to either of Claims 10 and 11, which is designed for a rated power of at least 5 MW.

13. Electrical machine (21) according to one of Claims 10 to 12, which is designed for a rotation speed of the rotor (1) of at least 1000 revolutions per minute.

## Revendications

1. Rotor (1) pour une machine électrique (21), comprenant
- au moins un ensemble de bobines électriques (3i),
- au moins un support d'enroulements (5, 5i) qui supporte mécaniquement ledit au moins un ensemble de bobines (3i) et l'entoure au moins partiellement sur un côté, situé radialement à l'extérieur, de l'ensemble de bobines,
- **caractérisé en ce que** le rotor présente un élément d'appui supplémentaire (11) qui est réalisé à la manière d'un squelette et soutient ledit au moins un support d'enroulements (5i) depuis une direction située radialement à l'intérieur,
- et **en ce que** le rotor présente une pluralité de cavités (7i) situées à l'intérieur, dans lesquelles un agent réfrigérant fluide (9) peut circuler, et qui sont, sur leur côté situé radialement à l'intérieur, adjacentes à l'élément d'appui (11), et sur leur côté situé radialement à l'extérieur, adjacentes audit au moins un ensemble de bobines (3i) et/ou audit au moins un support d'enroulements (5i),
de telle sorte que ledit au moins un ensemble de bobines (3i) peut entrer en contact avec l'agent réfrigérant (9) au moins sur son côté situé radialement à l'intérieur.

2. Rotor (1) selon la revendication 1, dans lequel l'ensemble de bobines électriques (3i) présente un matériau supraconducteur.

3. Rotor (1) selon la revendication 1 ou 2, présentant une pluralité n d'ensembles de bobines (3i),
- chacun des ensembles de bobines (3i) étant disposé sur un support d'enroulements (5i) individuel associé à celui-ci.

4. Rotor (1) selon la revendication 1 ou 2, présentant une pluralité n d'ensembles de bobines (3i),
- chacun des ensembles de bobines (3i) étant disposé sur un segment circonférentiel associé à celui-ci d'un support d'enroulements (5) commun de niveau supérieur.

5. Rotor (1) selon l'une quelconque des revendications précédentes, présentant en outre au moins un bandage (13) au moyen duquel ledit au moins un support d'enroulements (5, 5i) est fixé dans le rotor.

6. Rotor (1) selon l'une quelconque des revendications précédentes, dans lequel l'agent réfrigérant liquide (9) est de l'hydrogène.

7. Rotor (1) selon l'une quelconque des revendications précédentes, présentant un écran amortisseur électriquement conducteur (15b) et/ou une paroi de cryostat (15a, 15b) qui entoure(nt) radialement ledit au moins un ensemble de bobines (3i).

8. Rotor (1) selon l'une quelconque des revendications précédentes, dans lequel ledit au moins un support d'enroulements (5, 5i) est configuré sans noyau.

9. Rotor (1) selon l'une quelconque des revendications précédentes, présentant une densité de matière moyenne d'un maximum de 8 g/cm³ par rapport à son volume total.

10. Machine électrique (21), comprenant un rotor (1) selon l'une quelconque des revendications précédentes et un stator (23) disposé de manière fixe.

11. Machine électrique (21) selon la revendication 10, conçue pour une puissance volumique d'au moins 5 kW/kg.

12. Machine électrique (21) selon l'une quelconque des revendications 10 et 11, conçue pour une puissance nominale d'au moins 5 MW.

13. Machine électrique (21) selon l'une quelconque des revendications 10 à 12, conçue pour une vitesse de rotation du rotor (1) d'au moins 1000 tours par minute.
